(19) Europäisches Patentamt
European Patent Office
Office européen des brevets

(11) EP 1 702 935 A1

(12) **EUROPEAN PATENT APPLICATION**
published in accordance with Art. 158(3) EPC

(43) Date of publication:
**20.09.2006 Bulletin 2006/38**

(21) Application number: **04807592.3**

(22) Date of filing: **22.12.2004**

(51) Int Cl.:
***C08F 8/42*** *(2006.01)* ***C08F 8/30*** *(2006.01)*
***B01J 20/26*** *(2006.01)*

(86) International application number:
**PCT/JP2004/019235**

(87) International publication number:
**WO 2005/061560 (07.07.2005 Gazette 2005/27)**

(84) Designated Contracting States:
**AT BE BG CH CY CZ DE DK EE ES FI FR GB GR HU IE IS IT LI LT LU MC NL PL PT RO SE SI SK TR**

(30) Priority: **22.12.2003 JP 2003425665**

(71) Applicant: **Showa Denko K.K.**
**Tokyo 105-8518 (JP)**

(72) Inventors:
- **FUJIMOTO, Etsuo,**
**c/o Corporate R & D Center**
**Kawasaki-shi,**
**Kanagawa 2100867 (JP)**
- **SHINODA, Akiko**
**Kawasaki-shi,**
**Kanagawa 2100867 (JP)**
- **MORIKAWA, Kohei**
**Kawasaki-shi,**
**Kanagawa 2100867 (JP)**
- **FUJIWARA, Yoshio**
**Kawasaki-shi,**
**Kanagawa 2100867 (JP)**

(74) Representative: **Strehl Schübel-Hopf & Partner**
**Maximilianstrasse 54**
**80538 München (DE)**

# (54) CROSSLINKED POLYMER HAVING PHTHALOCYANINE BONDED THERETO

(57) This invention provides a crosslinked polymer produced by polymerizing one or more crosslinking monomers and bonding, preferably covalently bonding, a phthalocyanine skeleton to the resultant polymer. The degree of crosslinking is 1% or higher. When this crosslinked polymer is used as an adsorbent, a polycyclic organic material present as a mixture in a solution can be selectively adsorbed, desorbed, or separated. The crosslinked polymer having a phthalocyanine bonded thereto is excellent not only in the ability to adsorb polycyclic organic materials, but in the ability to desorb the adsorbed polycyclic organic materials. Accordingly, the crosslinked polymer is particularly useful for selective adsorption, desorption/concentration, or separation of polycyclic organic materials, e.g., mutagens, present in a very small amount, for example, in environments, foods, table luxuries, biological samples and can be widely utilized for the qualitative determination, quantitative determination, or removal of mutagens.

EP 1 702 935 A1

## Description

### TECHNICAL FIELD

The present invention relates to a polymer comprising a phthalocyanine skeleton chemically bonded to a crosslinked polymer that is useful for the removal and analysis of polycyclic organic materials present in very small amounts as a mixture, for example, in environments and foods. Further, the present invention relates to a method for selectively adsorbing, desorbing, or separating polycyclic organic materials, particularly mutagens, present as a mixture in a solution, by using a crosslinked polymer with a phthalocyanine bonded thereto as an adsorbent, and a tool for use in said method.

### BACKGROUND ART

In recent years, attention has been directed to mutagens present in a very small amount as a mixture, for example, in environments and foods. The development of a technique for removing these materials and a technique for analyzing these materials is a very important goal to be attained.
Methods useful for selectively adsorbing and removing such mutagens and for desorbing and separating such mutagens include, for example, methods described in Japanese Patent Publication No. 13481/1986 and Japanese Patent Publication No. 1540/1987. In these methods, materials produced by chemically bonding a phthalocyanine skeleton to naturally occurring polymers or organic materials, for example, polysaccharides such as Sepharose, cellulose such as paper or cotton, and polyamides such as wool, silk, or nylon are used as adsorbents. Such adsorbents, however, are nonporous and have a small surface area and thus are disadvantageous in that the introduction of a compound having a phthalocyanine skeleton is restricted and, in addition, the adsorption capacity is small.
Japanese Patent Publication No. 7817/1989 and Japanese Patent Publication No. 698/1992 disclose the systems comprising a phthalocyanine skeleton supported on an ion exchange resin. It is likely that these systems are unfavorably influenced by pH.
Further, Japanese Patent Publication No. 15036/1994 and Japanese Patent Laid-Open No. 148860/1992 disclose systems comprising a phthalocyanine skeleton supported, for example, on silica gel or glass beads. In these cases, such systems are likely to be influenced by the residual cyanol group and the residual trace metals, and, thus, the procedure for avoiding the influence of the residue is disadvantageously complicated.
Hereafter, meeting a demand for coping with an increase in types of chemical substances to be removed and detection and analysis of chemical substances present as a mixture in a lower concentration is expectedly required. To this end, diversifying treatment conditions and improving treatment speed have been desired.

Patent document 1: Japanese Patent Publication No. 13481/1986
Patent document 2: Japanese Patent Publication No. 1540/1987
Patent document 3: Japanese Patent Publication No. 7817/1989
Patent document 4: Japanese Patent Publication No. 698/1992
Patent document 5: Japanese Patent Publication No. 15036/1994
Patent document 6: Japanese Patent Laid-Open No. 148860/1992

### DISCLOSURE OF THE INVENTION

### PROBLEMS TO BE SOLVED BY THE INVENTION

An object of the present invention is to provide a crosslinked polymer having a phthalocyanine skeleton bonded thereto. Another object of the present invention is to provide a separating agent using the crosslinked polymer according to the present invention. The separating agent has a high ability to adsorb polycyclic organic materials, is less likely to be influenced by pH and the like, and has excellent mechanical strength. The separating agent can be used, for example, as pretreating agents for analysis, packing materials for columns in high performance liquid chromatography, and adsorbents.

### MEANS FOR SOLVING PROBLEMS

The present inventors have made studies with a view to attaining the above obj ects of the present invention. As a result, they have succeeded in providing a crosslinked polymer having a high ability to adsorb polycyclic organic materials and having a phthalocyanine skeleton by chemically bonding (preferably through only covalent bonding) a compound having a phthalocyanine skeleton to a crosslinking polymer produced by polymerizing a specific monomer.

This has led to the completion of the present invention. The resultant crosslinked polymer is less likely to be influenced by pH and the like and has high strength by virtue of its crosslinked structure and, thus, is useful as a separating agent.

The present invention will be summarized below.

[1] A crosslinked polymer produced by polymerizing at least one crosslinkable monomer and then bonding a phthalocyanine skeleton to the resultant polymer.

[2] The crosslinked polymer according to the above item [1] wherein the degree of crosslinking in the crosslinked polymer is not less than 1%.

[3] The crosslinked polymer according to the above item [1] or [2] wherein the bonding amount of the phthalocyanine skeleton within the crosslinked polymer is 5 to 1000 μmol/g on a dry basis.

[4] The crosslinked polymer according to any of the above items [1] to [3] wherein the bond through which the phthalocyanine skeleton and the crosslinked polymer are bonded to each other is only a covalent bond.

[5] The crosslinked polymer according to any of the above items [1] to [4] wherein the phthalocyanine skeleton and the crosslinked polymer are bonded to each other by use of a reaction of an active hydrogen-containing group with a group reactive with active hydrogen in a reaction between a compound having a phthalocyanine skeleton and the crosslinked polymer.

[6] The crosslinked polymer according to the above item [5] wherein the compound having a phthalocyanine skeleton contains a group reactive with active hydrogen and the crosslinked polymer contains an active hydrogen-containing group.

[7] The crosslinked polymer according to the above item [5] wherein the compound having a phthalocyanine skeleton contains an active hydrogen-containing group and the crosslinked polymer contains a group reactive with active hydrogen.

[8] The crosslinked polymer according to any of the above items [5] to [7] wherein the active hydrogen-containing group is a hydroxyl, amino or thiol group.

[9] The crosslinked polymer according to any of the above items [5] to [8] wherein the group reactive with active hydrogen is at least one group selected from dihalogenotriazine, monohalogenotriazine, trihalogenopyrimidine, sulfatoethylsulfone, dihalogenoquinoxaline, dihalogenopyridazinone, dihalophthalazine, sulfatoethylsulfone amide, mono- or dihalogenopyrimidine, dihalogenobenzothiazole, aldehyde, ethylenic double bond, oxirane ring, acid chloride, and isocyanate.

[10] The crosslinked polymer according to any of the above items [1] to [9], having a BET specific surface area of not less than 10 $m^2$/g.

[11] The crosslinked polymer according to any of the above items [1] to [10], wherein the crosslinked polymer is a crosslinked polymer produced by polymerizing at least one monomer containing an active hydrogen-containing group or its precursor, or a group reactive with active hydrogen or its precursor.

[12] The crosslinked polymer according to any of the above items [1] to [11] wherein the phthalocyanine skeleton is at least one group selected from metal-free phthalocyanines, or copper, iron, nickel, cobalt, zinc or aluminum metal-containing phthalocyanines.

[13] A process for producing the crosslinked polymer according to any of the above items [1] to [12], characterized by reacting an active hydrogen-containing group with a group reactive with active hydrogen.

[14] A molded adsorbent comprising the crosslinked polymer according to any of the above items [1] to [12] held onto a binder.

[15] A compound-separating tool comprising at least one crosslinked polymer according to any of the above items [1] to [12] which has been coated onto, spread onto, packed or filled into, installed in, inserted into, or hermetically sealed into a support with or without a binder.

[16] A compound-separating tool comprising the molded adsorbent according to the above item [14] which has been coated onto, spread onto, packed or filled into, installed in, inserted into, or hermetically sealed into a support with or without a binder.

[17] The compound-separating tool according to the above item [15] or [16], which is a column, cartridge, filter, plate, or capillary for solid phase extraction, liquid chromatography, or gas chromatography, or a plate for thin layer chromatography.

[18] A method for treating polycyclic organic materials, characterized by adsorbing, desorbing, or separating polycyclic organic materials present as a mixture in a solution or a gas by use of the compound-separating tool according to any of the above items [15] to [17].

EFFECT OF THE INVENTION

A crosslinked polymer having a phthalocyanine skeleton bonded thereto according to the present invention can provide a porous crosslinked polymer possessing desired properties including the degree of polymerization, the

degree of crosslinking, and porosity by properly adjusting the type of monomer, composition, and polymerization conditions. The phthalocyanine-bonded crosslinked polymer according to the present invention can provide a separating agent that is less likely to be influenced by pH and the like, has excellent mechanical strength, and a high level of ability to adsorb various materials. The crosslinked polymer having a phthalocyanine bonded thereto according to the present invention is particularly excellent not only in the ability to adsorb polycyclic organic materials, but in the ability to desorb the adsorbed polycyclic organic material.

BEST MODE FOR CARRING OUT THE INVENTION

The crosslinked polymer according to the present invention may be in any desired form, and specific examples thereof include spherical particles and crushed particles. For some applications, the crosslinked polymer can also be favorably utilized, for example, in the form of films, sheets, fibers such as nonwoven fabrics, or massive continuous materials. The polymerization method therefor is not particularly limited so far as it can satisfactorily provide the above forms without any problem. For example, a polymer produced by bulk polymerization within a suitable vessel may be used either as such or after crushed to a suitable size. Further, in some cases, the polymer together with the vessel as such may be used as a separating tool.

In the production of the crosslinked polymer used in the present invention, any polymerizable monomer selected from the following monomer (A) or (B) is used. Although there is no need to use both monomers (A) and (B) at the same time, a plurality of types of monomers belonging to monomer (A) or (B) may be used. The term "crosslinked polymer" used herein refers to a polymer having crosslinks produced by polymerizing the above monomer.

(A) A monomer containing an active hydrogen-containing group or its precursor, and one or more monomers of this type are used. Examples of active hydrogen-containing groups include hydroxyl, amino, and thiol groups.

(B) A monomer containing a group reactive with active hydrogen or its precursor, and one or more monomers of this type are used. Examples of groups reactive with active hydrogen include dihalogenotriazine, monohalogenotriazine, trihalogenopyrimidine, sulfatoethylsulfone, dihalogenoquinoxaline, dihalogenopyridazinone, dihalophthalazine, sulfatoethylsulfone amide, mono- or dihalogenopyrimidine, dihalogenobenzothiazole, aldehyde, ethylenic double bond, oxirane ring, acid chloride, and isocyanate. Preferred are aldehyde, ethylenic double bond, oxirane ring, acid chloride, and isocyanate.

Further, in the present invention, (C) a crosslinkable vinyl monomer is supplementally used. Here the term "vinyl" as used herein means that a polymerizable carbon-carbon double bond is contained. When monomer (A) or (B) contains two or more polymerizable groups and is crosslinkable, the addition of monomer (C) is not necessarily required. When a precursor-containing monomer is used as monomer (A) or (B), after the polymerization, the precursor part is converted to an active hydrogen-containing group or a group reactive with active hydrogen by a suitable method such as saponification. Examples of methods usable herein include a method in which a hydroxyl group is introduced by hydrolyzing an epoxy ring, a method in which vinyl acetate is saponified with an alkali to introduce a hydroxyl group, and a method in which a chlorobenzyl group is converted to an aminobenzyl group by Gabriel's synthesis.

Particular examples of specific monomers (A) having an active hydrogen-containing group or its precursor include glycerin di(meth)acrylate, trimetylolpropane diallyl ether, pentaerythritol triallyl ether, 2-hydroxyethyl(meth)acrylate, p-acetoxystyrene, p-t-butyloxystyrene, and vinyl acetate. They may be used either solely or in a combination of two or more of them. Among them, for example, glycerin di(meth)acrylate, trimetylolpropane diallyl ether, and pentaerythritol triallyl ether are monomers that are also crosslinkable.

Particular examples of specific monomers (B) having a group reactive with active hydrogen or its precursor include glycidyl (meth)acrylate, o-, m-, or p-(chlormethyl)styrene, and maleic anhydride. They may be used either solely or in a combination of two or more of them.

Specific examples of crosslinkable vinyl monomers (C) include polyvinyl aromatic monomers such as divinylbenzene, divinylxylene, divinylnaphthalene, trivinylbenzene, and divinyl phenol; polyhydric alcohol poly(meth)acrylic ester monomers such as ethylene glycol di(meth)acrylate, diethylene glycol di (meth) acrylate, triethylene glycol di(meth)acrylate, polyethylene glycol di(meth)acrylate, propylene glycol di(meth)acrylate, polypropylene glycol di(meth)acrylate, trimethylolpropane tri(meth)acrylate, tetramethylolmethane tri(meth)acrylate, and tetramethylolmethane tetra(meth)acrylate; polyallyl ethers such as diallyl ether and tetraallyloxyethane; and N,N'-lower alkylenebis(N-vinylcarboxylic acid amide) such as N,N'-1,3-propylenebis(N-vinylacetamide) and N,N'-1,2-methylenebis(N-vinylacetamide). These monomers may be used either solely or in a combination of two or more of them. When a crosslinkable monomer is used as monomer (A) or (B), there is no need to use crosslinkable vinyl monomer (C).

In the present invention, monomer (A) or (B) is preferably used in an amount of 5% by mass to 100% by mass based on the total monomer amount used in the production of the crosslinked polymer. The amount of monomer (A) or (B) used is particularly preferably 10% by mass to 100% by mass, more preferably 15% by mass to 100% by mass.

The degree of crosslinking according to the present invention is determined by the following equation:

$$(\text{total mass of crosslinkable vinyl monomers}/100 \text{ mass in total of all monomers}) \times 100 = \text{degree of crosslinking } (\%)$$

The term "crosslinkable vinyl monomer" usable herein refers to a monomer having two or more polymerizable carbon-carbon double bonds (that is, ethylenic double bonds), and the total mass of the crosslinkable vinyl monomers is the total monomer amount of crosslinkable monomers in monomers (A) and (B) and crosslinkable vinyl monomer (C). In the present invention, the degree of crosslinking is preferably not less than 1%, more preferably not less than 20%, still more preferably not less than 30%. The upper limit of the degree of crosslinking may be 100%. When the degree of crosslinking is less than 1%, the strength of the crosslinked polymer is disadvantageously low.

In the present invention, in addition to monomers (A), (B), and (C), noncrosslinkable vinyl monomer (D) copolymerizable with these monomers can also be used.

Specific examples of noncrosslinkable vinyl monomers (D) include aromatic vinyl monomers such as styrene, o-, m-, or p-methylstyrene, vinylnaphthalene, and 4-vinylpyridine; (meth)acrylic ester monomers such as methyl(meth)acrylate, ethyl (meth) acrylate, octadecyl (meth) acrylate, and polyethylene glycol (meth) acrylate; and unsaturated ether monomers such as ethyl vinyl ether. They may be used either solely or in a combination of two or more of them.

The term "(meth)acry" as used herein refers to "acry" or "methacry."

The polymerization in the present invention may be carried out by conventional radical polymerization such as solution polymerization, bulk polymerization, suspension polymerization, or emulsion polymerization. The preparation of spherical particles by aqueous suspension polymerization will be described as a representative example. The polymerization method, however, is not limited to this method.

An oil layer used in the aqueous suspension polymerization is prepared by a method in which a polymerization initiator is added to a mixture of a monomer with a solvent or a dispersion medium.

The solvent or dispersion medium is added to the monomer mixture from the viewpoint of rendering the resultant crosslinked copolymer particles porous. The type of the solvent or dispersion medium is not particularly limited when the polymerization is carried out, for example, by bulk polymerization not using water in the medium. On the other hand, for example, in the case of aqueous suspension polymerization using water in the medium, the use of an organic compound with low water solubility as the solvent or dispersion medium is preferred. Specific examples thereof include toluene, xylene, diethylbenzene, hepetane, otctane, dodecane, butyl acetate, dibutyl phthalate, isoamyl alcohol, 1-hexanol, cyclohexanol, 2-ethylhexanol, 1-dodecanol, and noncrosslinking polystyrene. These solvents or dispersion media may be used either solely or in a mixture of two or more of the above solvents or dispersion media in combination.

The BET specific surface area of the crosslinked polymer can be adjusted by determining these combinations based particularly on the affinity for the selected monomer. Specifically, the selection of a combination having high affinity for the selected monomer can enhance the BET specific surface area. When the adsorption speed is taken into consideration, the BET specific surface area of the resultant crosslinked polymer is desirably not less than 10 $m^2/g$, preferably not less than 100 $m^2/g$, more preferably not less than 200 $m^2/g$. Thus, the crosslinked polymer according to the present invention has a high BET specific surface area, indicating that the crosslinked polymer is a porous polymer.

The amount of the solvent or dispersion medium to be added is 10 to 300 % by mass, preferably 30 to 200 % by mass, more preferably 40 to 150 % by mass, based on the total amount of the monomers. When the amount of addition is less than 10% by mass, the porosity of the porous copolymer particles is disadvantageously unsatisfactory. On the other hand, when the addition amount exceeds 300% by mass, the physical strength of the porous copolymer particles is disadvantageously unsatisfactory.

Examples of polymerization initiators include conventional polymerization initiators, for example, azo compounds such as 2,2'-azobis(isobutyronitrile) and 2,2'-azobis(2,4-dimethylvaleronitrile); and organic peroxides such as benzoyl peroxide, dicumyl peroxide, di-t-butyl peroxide, t-butyl perbenzoate, and methyl ethyl ketone peroxide. They may be used either solely or in a combination of two or more of them. The concentration of the polymerization initiator to be used is properly determined depending upon the type of monomer and the like and thus cannot be specified unconditionally. However, the concentration of the polymerization initiator is preferably 0.1 to 5 % by mass based on the total amount of the monomers.

A dispersion stabilizer is added for the preparation of the water phase. Dispersion stabilizers usable herein include water soluble polymer compounds such as polyvinyl alcohol, alkylcellulose, hydroxyalkylcellulose, carboxyalkylcellulose, sodium polyacrylate, and gelatin. The concentration of the dispersion stabilizer is not particularly limited. The concentration, however, is preferably 0.1 to 5 % by mass based on water. The addition of salts to the water phase is preferred from the viewpoint of preventing the dissolution of a part of the monomer in the water phase. Examples of salts which may be added include sodium chloride, calcium chloride, and sodium sulfate. These salts may be used either solely or in a combination of two or more of them. The concentration of salts used is not particularly limited. Preferably, however, the concentration is as high as possible in such a range that can be accepted in terms of solubility. For example, in the case of a combination of water with sodium chloride, the concentration of sodium chloride is 1 to 15 % by mass, and, in the case of a combination of water with calcium chloride, the concentration of calcium chloride is 1 to 40 % by mass.

When the proportion of the water phase to the oil phase is excessively large, the amount of a part of the monomer dissolved into the water phase is disadvantageously increased. On the other hand, when the proportion of the water phase to the oil phase is excessively small, coalescence of oil droplets is likely to occur. The mass of water used is preferably 200 to 1000 % by mass based on the total amount of the monomer and the solvent or dispersion medium. Before the initiation of the aqueous suspension polymerization, the oil phase is mixed with the water phase for dispersion in such a manner that the oil droplets are brought to a target particle diameter (diameter of particles). For example, an agitation device provided with an agitation blade for atomization, or a high speed dispergator (a homogenizer) may be used for the dispersion. Preferably, an agitation device provided with an agitation blade for atomization is used in the preparation of an adsorbent having a relatively large particle diameter (for example, solid phase extraction). A high-speed dispergator (a homogenizer) is used in the preparation of an adsorbent having a relatively small particle diameter (for example, an adsorbent for liquid chromatography).

The polymerization reaction is carried out under ordinary agitation conditions in the temperature range of 40 to 100°C for 5 to 16 hr.

The copolymer particles thus obtained are porous particles having an average particle diameter of 0.1 to 2000 μm. The average particle diameter of the porous copolymer particles is preferably 1 to 500 μm, more preferably 2 to 200 μm. When the average particle diameter is less than 0.1 μm, the strength is unsatisfactory. On the other hand, when the average particle diameter exceeds 2000 μm, the adsorption rate per given weight is disadvantageously lowered and the properties as the adsorbent is disadvantageously deteriorated.

The crosslinked polymer having a phthalocyanine skeleton bonded thereto, according to the present invention is produced by polymerizing at least one crosslinkable monomer to give a crosslinked polymer and then bonding a phthalocyanine skeleton to the crosslinked polymer. A phthalocyanine-bonded crosslinked polymer having desired properties including porosity and degree of crosslinking can be produced by properly adjusting the type of monomer, composition, a polymerization method and the like. When a phthalocyanine is bonded to the conventional naturally occurring polymer or organic polymer, there is a limitation on the regulation of a bonding form, a bonding amount, porosity and the like.

Next, the crosslinked polymer and the phthalocyanine skeleton are bonded to each other to prepare a phthalocyanine-bonded crosslinked polymer. A reaction between an active hydrogen-containing group and a group reactive with active hydrogen is utilized as the reaction between the compound having a phthalocyanine skeleton and the crosslinked polymer. Specifically, the reaction may be carried out by reacting an active hydrogen-containing group possessed by the crosslinked polymer with a compound having a phthalocyanine skeleton and containing a group reactive with active hydrogen. Alternatively, the reaction may be carried out by reacting a group reactive with active hydrogen possessed by the crosslinked polymer with a compound having a phthalocyanine skeleton and containing an active hydrogen-containing group.

The term "phthalocyanine skeleton" as used herein refers to a structure containing a compound represented by the following formula in its nucleus.

[Chemical formula 1]

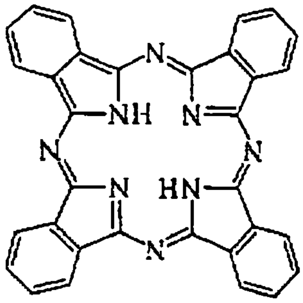

Such phthalocyanine skeletons include metal-free phthalocyanines and, further, phthalocyanines containing metals such as copper, iron, nickel, cobalt, zinc, aluminum, vanadium, manganese, and molybdenum.

Examples of compounds having a phthalocyanine skeleton and containing a group reactive with active hydrogen include phthalocyanines having a dihalogenotriazine group introduced thereinto. They may be produced by a reaction of an aminophthalocyanine compound with halogenotriazine, or by a reaction of phthalocyanine sulfonic acid chloride or phthalocyaninecarboxylic acid chloride with aminotriazine. Specifically, a phthalocyanine with a dichloro-1,3,5-triazinyl group introduced thereinto is produced by reacting copper phthalocyanine tetrasulfone chloride as the phthalocyaninesulfonic acid chloride, which may be produced by a method described in U.K. Patent No. 515637, with 2-amino- or 2-methylamino-4,6-dichloro-1,3,5-triazine according to a method described in Japanese Patent Publication No. 5436/1959.

Other examples of preferred compounds having a phthalocyanine skeleton include those which are well known as reactive dyes in the dye industry. Examples thereof include dyes in which a dihalogenotriazine, monohalogenotriazine, trihalogenopyrimidine, sulfatoethylsulfone, dihalogenoquinoxaline, dihalogenopyridazinone, dihalophthalazine, sulfatoethylsulfone amide, mono- or dihalogenopyrimidine, acrylamide, vinyl sulfone, dihalogenobenzothiazole or other reactive group, or a reactive group having the above reactive group as a part of the structure is bonded to a phthalocyanine nucleus either directly or through a covalent bond spacer.

The following groups may be included as specific examples of reactive groups.

Dihalogenotriazine: (dichloro-1,3,5-triazinyl)

[Chemical formula 2]

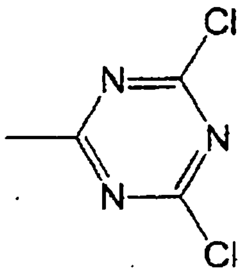

Monohalogenotriazines: (monochloro-1,3,5-triazinyl)

[Chemical formula 3]

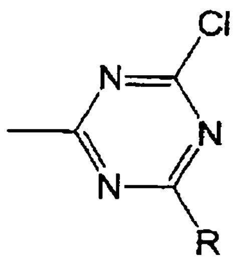

R: various substituents
Trihalogenopyrimidine: (2,4,5-trichloropyrimidinyl)
[Chemical formula 4]

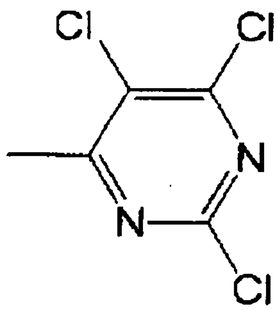

Sulfatoethylsulfone:
$-SO_2CH_2CH_2OSO_3H$ (β-sulfatoethylsulfonyl)
$-SO_2CH_2CH_2Cl$ (β-chloroethylsulfonyl)
Dihalogenoquinoxaline: (2,3-dichloroquinoxaline-6-carbonyl)
[Chemical formula 5]

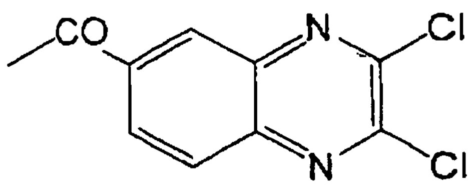

Sulfatoethylsulfone amide: $-SO_2NHC_2H_4OSO_3H$ (β-sulfatoethylaminosulfonyl) Mono- or dihalogenopyrimidine: (2-methylsulfonyl-4-methyl-5-chloropyrimidinyl)
[Chemical formula 6]

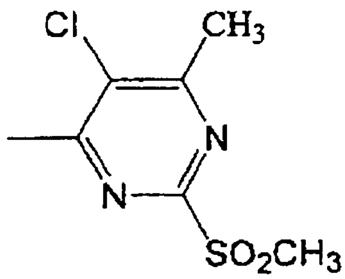

(2,4-dichloropyrimidinyl)

[Chemical formula 7]

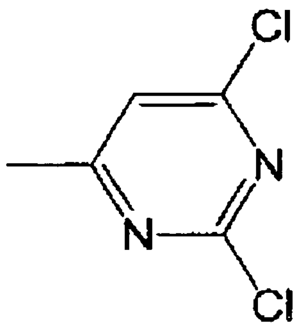

Dihalophthalazine: (1,4-dichlorophthalazine-6-carbonyl)

[Chemical formula 8]

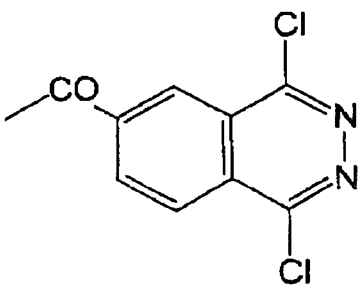

Dihalogenopyridazinone: (4,5-dichloro-2,3-dihydro-6-pyridazinone-2-propionyl)

[Chemical formula 9]

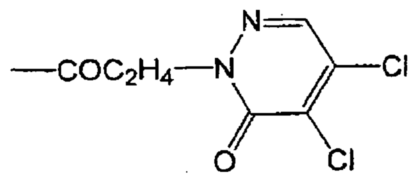

Acrylamide:
$-NHCOCH_2CH_2OSO_3H$ (β-sulfatopropionylamide)
$-NHCOCH_2CH_2Cl$ (β-chloropropionylamide)
Vinyl sulfone:
$-SO_2CH=CH_2$ (vinylsulfonyl)
Methylolamide:
$-NHCH_2OH$
Halogenobenzothiazole: (chlorobenzothiazolyl)
[Chemical formula 10]

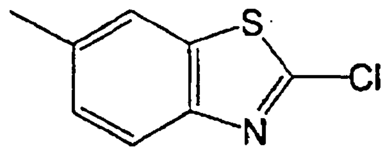

Further, compounds containing a sulfonic acid chloride, carboxylic acid chloride, isocyanate or other reactive group and having a phthalocyanine skeleton may be mentioned as the compound containing a group reactive with active hydrogen.

Such reactive group-containing reactive dyes are described, for example, in Japanese Patent Publication No. 5436/1959, Japanese Patent Publication No. 12780/1960, Japanese Patent Publication No. 5033/1963, Japanese Patent Publication No. 17676/1964, Japanese Patent Publication No. 7782/1965, and Japanese Patent Publication No. 1027/1972.

On the other hand, compounds having a phthalocyanine skeleton and containing an active hydrogen-containing group include phathalocyanine with a hydroxyl, amino, or thiol group introduced thereinto, and examples thereof include phthalocyanines with a methylolamino or other reactive group introduced thereinto.

In the reaction between the compound having a phthalocyanine skeleton and the crosslinked polymer, when the crosslinked polymer contains an active hydrogen-containing group, a phthalocyanine-skeleton containing compound having a group reactive with an active hydrogen-containing group as well is used as the compound having a phthalocyanine skeleton. This crosslinked polymer may be one produced by a polymerization using at least one monomer containing an active hydrogen-containing group or its precursor or a combination of them. In this case, the crosslinkable vinyl monomer (C) or the noncrosslinkable vinyl monomer (D) may be or may not be used.

When the crosslinked polymer contains a group reactive with active hydrogen, a compound containing an active hydrogen-containing group is used as the compound having a phtalocyanine skeleton. This crosslinked polymer may be produced by a polymerization using at least one monomer containing a group reactive with an active hydrogen-containing group or its precursor or a combination of them. In this case, the crosslinkable vinyl monomer (C) or the noncrosslinkable vinyl monomer (D) may be or may not be used.

Conditions for the reaction in the production of the crosslinked polymer according to the present invention are not particularly limited so far as an active hydrogen-containing group in one of the materials is reacted with a group reactive with active hydrogen-containing group in the other material. For example, the crosslinked polymer may be produced according to the following conventional method in which a fiber material is dyed with a reactive dye.

Specific examples of reactive dyes include the following dyes.
KAYACELON REACT TURQUOISE CN-2G, KAYACION TURQUOISE E-NA, and KAYACION TURQUOISE P-3GF manufactured by Nippon Kayaku Co., Ltd.; DRIMARENE BRILLIANT GREEN K-5BL CDG, DRIMARENE TURQUOISE K-2B CDG, and DRIMARENE TURQUOISE CL-B GRAN manufactured by Clariant Japan; Remazol Brilliant Green 6B 175% and Remazol Turquoise Blue G 133 manufactured by DyStar Japan Ltd. ; and Sumifix Supra Turquoise Blue BGF (N) and Sumifix Turquoise G(N) conc manufactured by Sumitomo Chemical Co., Ltd.
Methods for the reaction usable herein include dip dyeing methods and printing methods.
The dip dyeing method is a method in which a material to be dyed is dipped in a reactive dye solution (a dyeing liquid) and is then dipped in a weak alkaline solution to complete the reaction. In the dyeing liquid, water is in many cases used as a main solvent. Organic solvents may be used either solely or as a water-organic solvent mixed system. A pad dyeing method may be mentioned as one of the dip dyeing methods. In the pad dyeing method, the material to be dyed is padded with a dyeing liquid, is dried, is treated with an alkali, and is heat treated to complete the reaction, or alternatively the material to be dyed is padded with an alkali-containing dyeing liquid, is dried, and is heat treated to complete the reaction. On the other hand, the printing method is a method in which dyeing is carried out using a printing paste (a colloidal solution having high viscosity) unlike the dip dyeing method in which a solvent is used as the medium. In many cases, an aqueous sodium alginate solution containing sodium bicarbonate, urea and the like is used as a printing paste in the case where a reactive dye is used. The formulation of a printing paste varies depending upon the material to be dyed or the type of the reactive dye, and, thus, the printing paste is not limited to this composition.

In the crosslinked polymer with the phthalocyanine skeleton bonded thereto produced by the above method, according to the present invention, the bond between the phthalocyanine skeleton and the crosslinked polymer may contain other chemical bond in addition to the covalent bond. Preferably, the bond consists of a covalent bond only. The bonding amount of phthalocyanine may be generally 5 to 1000 μmol per g of the dry weight of the crosslinked polymer. From the viewpoints of the production cost and adsorption efficiency, preferably, the bonding amount is 10 to 500 μmol per g of the dry weight of the crosslinked polymer, more preferably 20 to 200 μmol per g of the dry weight of the crosslinked polymer. When the bonding amount of the phthalocyanine is less than 5 μmol/g on a dry basis, the adsorption amount for polycyclic organic materials is so small that the contemplated effect cannot be attained. On the other hand, it appears that the amount of adsorped polycyclic organic materials may be increased with increasing the amount of the bound phthalocyanine. In fact, however, the chemical bonding amount which can be chemically stably realized is limited. In the present invention, however, since phthalocyanine is supported on a porous polymer gel, the bonding amount of phthalocyanine is increased.
When the phthalocyanine-bonded crosslinked polymer according to the present invention is used, polycyclic organic materials can be selectively adsorbed on the crosslinked polymer with a phthalocyanine bonded thereto. The phthalocyanine-bonded crosslinked polymer is particularly effective for tri- or higher cyclic organic materials.

Accordingly, a polycyclic organic material can be advantageously concentrated or separated by adsorbing the polycyclic organic material on the phthalocyanine-bonded crosslinked polymer and then desorbing the adsorbed polycyclic organic material. For example, concentration or separation of the polycyclic organic material can be realized in a short elution time without using a large amount of a solvent by adsorbing a polycyclic organic material on the phthalocyanine-bonded crosslinked polymer in a polycyclic organic material-containing gas or liquid and eluting and desorbing the adsorbed polycyclic organic material with a solvent.

Specifically, the polycyclic organic material is adsorbed in a phthalocyanine skeleton-bonded crosslinked polymer, for example, by adding a phthalocyanine-bonded crosslinked polymer to a polycyclic organic material-containing solution, particularly aqueous solution and then by subjecting the mixture to agitation, shaking and the like generally at 0 to 100°C, preferably 15 to 30°C. Alaternatively, a method may also be adopted which comprises packing a column with a phthalocyanine-bonded crosslinked polymer and passing a polycyclic organic material-containing solution through the column.

The polycyclic organic material adsorbed on the phthalocyanine skeleton-bonded crosslinked polymer may also be desorbed by using a neutral, weakly alkaline or weakly acidic solution, for example, a solvent such as methanol, a methanol-hydrochloric acid solution, or an aqueous methanol-ammonia solution and conducting agitation or shaking at a temperature at or below the boiling point of the solvent. When a column packed with a phthalocyanine-bonded crosslinked polymer is used, the desorption can be carried out by passing the above solvent through the column.

Examples of polycyclic organic materials which can be advantageously concentrated or separated using the crosslinked polymer according to the present invention include, for example, aromatic or heterocyclic compounds having two or more rings, and specific examples thereof include, but are not limited to, dioxins, polybiphenyl chlorides, polybiphenyl bromides, and polycyclic aromatic hydrocarbons (including PAHs and benzo(a)pyrenes), Trp-P-1 (3-amino-1,4-dimethyl-5H-pyrido[4,3-b]indole), Trp-P-2 (3-amino-1-methyl-5H-pyrido[4,3-b]indole), Glu-P-1 (2-amino-6-methyldipyrido[1,2-a:3',2'-d]imidazole), Glu-P-2 (2-amino-dipyrido[1,2-a:3',2'-d]imidazole), amino-α-carboline (2-amino-9H-pyrido[2,3-b]indole), aminomethyl-α-carboline (2-amino-3-methyl-9H-pyrido[2,3-b]indole), IQ (2-amino-3-methylimidazo[4,5-f]quinoline), 2-AAF (2-acetylaminofluorene), ethidium bromide, MeIQX (2-amino-3,8-dimethylimidazo-[4,5-f]quinoxaline), 9-aminoacridine, quinacrine, 8-methoxypsoralen, chlorpromazine, and Norharman (β-carboline). As a result of accumulation of a number of studies, it has been clarified that some of these polycyclic organic materials are mutagenic or carcinogenic substances to humans and animals. The "mutagenic material" as used herein refers to a material that induces mutation with a higher frequency than natural mutation.

The polycyclic organic material-containing liquid or gas may be one or at least two liquids or gases selected, for example, from environmental water such as rainwater, river water, lake water, clean water, sewage, industrial waste water, and sea water; body fluids such as urine and blood or a liquid separated or extracted from them; extracted liquids from plant or animal tissues; incinerator waste gas, waste gas from various production facilities, environmental air such as air collected from the sky above arterial roads, or indoor air or absorption liquids prepared by passing them into absorbing liquids; foods and table luxuries such as agricultural products, marine products, animal products, and processed foods, or extracted liquids obtained by extracting them with a solvent or the like. The polycyclic organic material-containing liquid or gas, however, is not limited to these liquids and gases.

In the crosslinked polymer according to the present invention, when the phthalocyanine skeleton contains no metal atom, the crosslinked polymer is also effective in capturing heavy metals or ions thereof, for example, copper, iron, nickel, cobalt, zinc, aluminum, vanadium, manganese, and molybdenum.

<Use>

As described above, the phthalocyanine skeleton-bonded crosslinked polymer according to the present invention has been polymerized so as to be porous to increase the surface area. As a result, the absorption capacity is increased, and, in addition, due to π electron interaction by the phthalocyanine skeleton disposed within the pores, the effect of enhancing the ability to capture polycyclic organic materials is expected. Further, the crosslinked structure can enhance the polymer strength, and, thus, it can be expected that the desorption of the phthalocyanine is less likely to occur. Thus, the crosslinked polymer with a phthalocyanine skeleton bonded thereto according to the present invention is excellent in the ability to adsorb materials present in very small amounts as a mixture and heavy metals.

The crosslinked polymer with a phthalocyanine skeleton bonded thereto, an adsorbent or separating agent, or a separating instrument, a compound-separating tool, and a reversible adsorption/desorption method using the crosslinked polymer are very useful in the field of research and development or quality control of drugs and medicines and foods and drinks and environmental protection. That is, they are particularly useful for selective adsorption, desorption/concentration, and separation of polycyclic organic materials, for example, mutagens, present in very small amounts, for example, in environment, foods, table luxuries, and biological materials. In particular, they can be widely utilized for microanalysis such as qualitative or quantitative analysis of various mutagens or for the removal of the mutagens. For example, they are useful for quantitative analysis of mutagens in river water, removal of mutagens from beef extracts, quantitative determination of mutagens in urine, and quantitative determination of mutagens in foods such as agricultural products, marine products, animal products, and processed foods. Further, they can also be utilized in tools for removing mutagens contained in the smoke of smoking, and in equipments for removing polluting substances or contaminants, for example, smoking filters and air cleaning filters, in the field of environmental hygiene.

One form of the utilization of the crosslinked polymer of the invention as an adsorbent is a molded adsorbent prepared by holding at least one crosslinked polymer on a binder. The compound-separating tool used as the adsorbent according to the present invention will be described. This is one embodiment of the present invention, and the present invention is not limited to this embodiment only.

The compound-separating tool according to the present invention can be prepared by a method in which at least one of the above molded adsorbent or crosslinked polymer according to the present invention is coated onto, spread onto, packed or filled into, installed in, inserted into, or hermetically sealed into a support without or together with a binder. The expression "together with a binder" means the preparation of a molded adsorbent directly in or on the surface of the support. Examples of the preparation procedure will be described. However, it should be noted that the procedure is not limited to these examples. The term "coating" refers to mainly application with a brush, or immersion in a suspension followed by pulling-up. The term "spreading" refers to mainly dispersion in gas, liquid or solid, or spraying. The term "packing" or "filling" refers to mainly packing or filling into a hollow vessel or tube as tightly as possible. The term "installing" refers to mainly placing, accumulating, sandwiching, pressure bonding, electrodeposition, or chemically bonding. The term "insertion" refers to mainly inserting or embedding. The term "hermetical sealing" refers to mainly sealing, confining, or covering.

The style of use of these compound-separating tool is not particularly limited. An example thereof is a method for treating a polycyclic organic material, characterized by adsorbing, desorbing, or separating polycyclic organic materials present as a mixture in a solution by use of a compound-separating tool. Columns, cartridges, filters, plates, capillary and the like for solid phase extraction or liquid chromatography may be mentioned as another example of the form of use. Further, for example, columns or capillaries for gas chromatography, plates for thin layer chromatography, and well plates or filters for solid phase extraction can also be prepared by altering the form of the support and additionally using a binder optionally.

A specific embodiment thereof is that the adsorbent is a syringe-type vessel (referred to as "reservoir") formed

of polyethylene or the like and equipped with a pair of upper and lower filters. Meeting the requirements that the resin reservoir is insoluble in organic solvents and the adsorbent does not flow out from the resin reservoir during concentration of a sample, suffices for the contemplated results, and the material and shape are not particularly limited. An example thereof is an assembly comprising a resin filter set in a 1 to 20 mL, preferably 3 to 6 mL, reservoir formed of, for example, polypropylene or polyethylene. The amount of the adsorbent filled into the reservoir is generally 50 to 600 mg, preferably 200 to 500 mg, based on 6 mL of the volume of the reservoir.

A column for liquid chromatography can be prepared by packing a suitable support with the crosslinked polymer according to the present invention. Meeting the requirements that the support is insoluble in an organic solvent and the adsorbent does not leak out during concentration of a sample, suffices for contemplated results, and the material and shape are not particularly limited. An example of the support is a conventional one, for example, a cylindrical empty column, formed of stainless steel, polyetherether ketone or the like having an inner diameter of 1 to 20 mm and a length of 5 to 500 mm, in which an end fitting provided with a filter and a piping connection can be connected to both ends of the column. Packing of the column with the adsorbent may be carried out by a conventional method, and the adsorbent amount and packing conditions are adjusted so as not to yield any space between ends of the empty column.

[EXAMPLES]

The present invention will be described in more detail with reference to the following examples. However, it should be noted that the present invention is not limited to these examples unless they are beyond the subject matter of the present invention.

<Measurement of specific surface area>

The specific surface area was measured with ASAP2010C manufactured by Micromeritics Instrument Corporation by the BET method.

<Measurement of metal content>

A sample was heat decomposed by sulfuric acid + nitric acid, and then the metal content was quantitatively determined by the ICP method with ICPS-200 manufactured by Shimadzu Seisakusho Ltd.

Example 1

Production of crosslinked polymer 1 with copper phthalocyanine bonded thereto

<Step of reaction>

Ion exchanged water (500 ml) was placed in a 1 L-volume separable flask and then placed and heated in an oil bath so that the water temperature was brought to 40°C. An anhydrous sodium sulfate (25 g) was added to and dissolved in the water. DRIMARENE TURQUISE K-2B CDG (a reactive copper phthalocyanine dye manufactured by Clariant Japan) (10 g) was then added, and the mixture was stirred at 40°C for 15 min.

A crosslinked polymer (30 g) produced by polymerizing 30 % by mass of ethylene glycol dimethacrylate and 70 % by mass of glycerin dimethacrylate was added to this solution, and the resultant mixture was stirred at 40°C for 20 min. Further, 10 g of anhydrous sodium carbonate was added to the resultant slurry. The slurry was held at 40°C for 15 min, was then heated to 80°C at a temperature rise rate of 1°C per min, and was held at 80°C for 120 min, then allowed to cool to room temperature.

<Step of washing>

The above slurry cooled to room temperature was suction filtered to prepare a deep blue particulate material. This deep blue particulate material was placed in 200 mL of ion exchanged water, and the mixture was stirred for 5 min and then suction filtered. This procedure was repeated five times in total. Next, the deep blue particulate material was placed in 100 mL of dimethyl sulfoxide, and the mixture was stirred for 5 min and then suction filtered. This procedure was repeated five times in total. Subsequently, this deep blue particulate material was placed in 200 mL of methanol, was stirred for 5 min, and was then suction filtered. This procedure was repeated three times in total. Next, this deep blue particulate material was placed in 200 mL of a mixed solution composed of methanol + 30% by mass of aqueous ammonia (50% by volume of methanol vs. 1% by volume of aqueous ammonia), and the mixture was stirred for 5 min and was then suction filtered. Further, this deep blue particulate material was placed in 200 mL of methanol, and the mixture was stirred for 5 min and was then suction filtered.

<Step of drying>

The deep blue particulate material subjected to the step of washing was dried at 70°C for 10 hr under reduced pressure to give 28 g of a light blue particulate material.

The content of copper phthalocyanine in this particulate material was 28 μmol per g of the particulate material, and the BET surface area was 40 $m^2/g$.

Example 2

Production of crosslinked polymer 2 with copper phthalocyanine bonded thereto

<Step of reaction>

A reaction with DRIMARENE TURQUISE K-2B CDG (a reactive copper phthalocyanine dye manufactured by Clariant Japan) was carried out in the same manner as in Example 1, except that 30 g of a crosslinked polymer produced by polymerizing 55 % by mass of divinylbenzene, 20 % by mass of glycerin dimethacrylate, and 25 % by mass of N-vinylacetamide was used.
<Step of washing>
The step of washing was carried out in the same manner as in Example 1.
<Step of drying>
The deep blue particulate material subjected to the step of washing was dried at 70°C for 10 hr under reduced pressure to give 28.5 g of a deep blue particulate material.
The content of copper phthalocyanine in this particulate material was 19 μmol per g of the particulate material, and the BET surface area was 504 $m^2$/g.

Example 3

Production of crosslinked polymer 3 with nickel phthalocyanine bonded thereto

<Step of reaction>

A reaction with 30 g of the crosslinked polymer produced by polymerizing 30 % by mass of ethylene glycol dimethacrylate and 70 % by mass of glycerin dimethacrylate was carried out in the same manner as in Example 1, except that DRIMARENE BRILLIANT GREEN K-5BL CDG (a reactive nickel phthalocyanine dye manufactured by Clariant Japan) was used instead of DRIMARENE TURQUISE K-2B CDG (a reactive copper phthalocyanine dye manufactured by Clariant Japan).
<Step of washing>
The resultant slurry cooled to room temperature was suction filtered to give a deep green particulate material. Thereafter, the step of washing was carried out in the same manner as in Example 1.
<Step of drying>
The deep green particulate material subjected to the step of washing was dried at 70°C for 10 hr under reduced pressure to give 28.7 g of a deep green particulate material.
The content of nickel phthalocyanine in this particulate material was 13 μmol per g of the particulate material, and the BET surface area was 42 $m^2$/g.

Example 4

Production of crosslinked polymer 4 with nickel phthalocyanine bonded thereto

<Step of reaction>

A reaction with 30 g of a crosslinked polymer produced by polymerizing 55 % by mass of divinylbenzene, 20% by mass of glycerin dimethacrylate, and 25% by mass of N-vinylacetamide was carried out in the same manner as in Example 1, except that DRIMARENE BRILLIANT GREEN K-5BL CDG (a reactive nickel phthalocyanine dye manufactured by Clariant Japan) was used instead of DRIMARENE TURQUISE K-2B CDG (a reactive copper phthalocyanine dye manufactured by Clariant Japan).
<Step of washing>
The resultant slurry cooled to room temperature was suction filtered to give a deep green particulate material. Thereafter, the step of washing was carried out in the same manner as in Example 1.
<Step of drying>
The deep green particulate material subjected to the step of washing was dried at 70°C for 10 hr under reduced pressure to give 28.7 g of a deep green particulate material.
The content of nickel phthalocyanine in this particulate material was 13 μmol per g of the particulate material, and the BET surface area was 508 $m^2$/g.

Example 5

Measurement of capacity ratio (capacity factor) K'

In the liquid chromatography, capacity ratio (capacity factor) K' is known as an index representing the level of retention on the packing material. This K' is regardless of column size, flow rate and the like. That is,

$$K' = (Tr-To)/To$$

wherein

K': capacity factor (capacity ratio),
Tr: retention time of target component,and
To: elution time of component not retained in the packing material at all.

For crosslinked polymers 1 to 4 with a metal phthalocyanine bonded thereto produced in Examples 1 to 4, K' was measured.
Each of the crosslinked polymers with a metal phthalocyanine bonded thereto produced in Examples 1 to 4 was packed into a Peek (polyetherether ketone) column (inner diameter 4.6 mm, length 10 mm) by the slurry method. A liquid prepared by dissolving benzene (50 ppm), anthracene (0.5 ppm), and triphenylene (0.5 ppm) as test compounds in an acetonitrile-water mixed liquid (acetonitrile/water = 7/3 (volume ratio)) to adjust the concentrations of these compounds to respective values within the above parentheses was analyzed by HPLC under the following conditions. The concentrations of the compounds are in ppm by weight. Conditions for HPLC analysis:
Column; Peek (polyetherether ketone) column (inner diameter 4.6 mm, length 10 mm), single column, sample loop; 5 μL, mobile phase; acetonitrile/water = 7/3 (volume ratio), flow rate; 0.3 mL/min, column oven temp.; 40°C, and detection wavelength; 254 nm. It should be noted that, although, normally, a component, which is not retained at all on the packing material, should be selected as To in the above equation for calculating K' , benzene was used as the index this time. For each compound, K' was calculated based on retention times obtained by HPLC. The results are also shown in Tables 1 to 4.
For comparative purposes, crosslinked polymers not having a phthalocyanine bonded thereto were packed into the same Peek column as described above, and HPLC analysis was carried out in the same manner as described above. K' values for respective compounds were calculated based on the retention times thus obtained.
The results are also shown in Tables 1 to 4.
From Tables 1 to 4, it is apparent that, as compared with crosslinked polymers not having a phthalocyanine bonded thereto, crosslinked polymers with a metal phthalocyanine bonded thereto had larger K' values for anthracene and triphenylene. Thus, the crosslinked polymer with a phthalocyanine bonded thereto according to the present invention, when used in solid phase extraction, can adsorb and desorb the above polycyclic organic materials contained in an environment in a more selective and rapid manner. Further, when the crosslinked polymer with a phthalocyanine bonded thereto according to the present invention is used in chromatography such as HPLC, a more rapid analysis can be attained.
[Table 1]

| HPLC test compound | Crosslinked polymer 1 | | Crosslinked polymer 1 having phthalocyanine bonded thereto (Ex. 1) | |
|---|---|---|---|---|
| | Rt. (Retention time), min | K' | Rt. (Retention time), min | K' |
| Benzene | 1.53 | 0.00 | 1.50 | 0.00 |
| Anthracene | 1.57 | 0.03 | 1.68 | 0.12 |
| Triphenylene | 1.55 | 0.01 | 3.43 | 1.29 |

[Table 2]

| HPLC test compound | Crosslinked polymer 2 | | Crosslinked polymer 2 having phthalocyanine bonded thereto (Ex. 2) | |
|---|---|---|---|---|
| | Rt. (Retention time), min | K' | Rt. (Retention time), min | K' |
| Benzene | 2.00 | 0.00 | 1.88 | 0.00 |
| Anthracene | 6.14 | 2.07 | 6.48 | 2.45 |
| Triphenylene | 11.00 | 4.50 | 22.90 | 11.18 |

[Table 3]

| HPLC test compound | Crosslinked polymer 3 | | Crosslinked polymer 3 having phthalocyanine bonded thereto (Ex. 3) | |
|---|---|---|---|---|
| | Rt. (Retention time), min | K' | Rt. (Retention time), min | K' |
| Benzene | 1.53 | 0.00 | 1.57 | 0.00 |
| Anthracene | 1.57 | 0.03 | 1.69 | 0.08 |
| Triphenylene | 1.55 | 0.01 | 3.84 | 1.45 |

[Table 4]

| HPLC test compound | Crosslinked polymer 4 | | Crosslinked polymer 4 having phthalocyanine bonded thereto (Ex. 4) | |
|---|---|---|---|---|
| | Rt. (Retention time), min | K' | Rt. (Retention time), min | K' |
| Benzene | 2.00 | 0.00 | 1.93 | 0.00 |
| Anthracene | 6.14 | 2.07 | 6.23 | 2.23 |
| Triphenylene | 11.00 | 4.50 | 21.16 | 9.96 |

## Claims

1. A crosslinked polymer produced by polymerizing at least one crosslinkable monomer and then bonding a phthalocyanine skeleton to the resultant polymer.

2. The crosslinked polymer according to claim 1 wherein the degree of crosslinking in the crosslinked polymer is not less than 1%.

3. The crosslinked polymer according to claim 1 or 2 wherein the bonding amount of the phthalocyanine skeleton within the crosslinked polymer is 5 to 1000 μmol/g on a dry basis.

4. The crosslinked polymer according to any of claims 1 to 3 wherein the bond through which the phthalocyanine skeleton and the crosslinked polymer are bonded to each other is only a covalent bond.

5. The crosslinked polymer according to any of claims 1 to 4 wherein the phthalocyanine skeleton and the crosslinked polymer are bonded to each other by use of a reaction of an active hydrogen-containing group with a group reactive with active hydrogen in a reaction between a compound having a phthalocyanine skeleton and the crosslinked polymer.

6. The crosslinked polymer according to claim 5 wherein the compound having a phthalocyanine skeleton contains a group reactive with active hydrogen and the crosslinked polymer contains an active hydrogen-containing group.

7. The crosslinked polymer according to claim 5 wherein the compound having a phthalocyanine skeleton contains an active hydrogen-containing group and the crosslinked polymer contains a group reactive with active hydrogen.

8. The crosslinked polymer according to any of claims 5 to 7 wherein the active hydrogen-containing group is a hydroxyl, amino or thiol group.

9. The crosslinked polymer according to any of claims 5 to 8 wherein the group reactive with active hydrogen is at least one group selected from dihalogenotriazine, monohalogenotriazine, trihalogenopyrimidine, sulfatoethylsulfone, dihalogenoquinoxaline, dihalogenopyridazinone, dihalophthalazine, sulfatoethylsulfone amide, mono- or dihalogenopyrimidine, dihalogenobenzothiazole, aldehyde, ethylenic double bond, oxirane ring, acid chloride, and isocyanate.

10. The crosslinked polymer according to any of claims 1 to 9, having a BET specific surface area of not less than 10 $m^2/g$.

11. The crosslinked polymer according to any of claims 1 to 10, wherein the crosslinked polymer is a crosslinked polymer produced by polymerizing at least one monomer containing an active hydrogen-containing group or its precursor, or a group reactive with active hydrogen or its precursor.

12. The crosslinked polymer according to any of claims 1 to 11 wherein the phthalocyanine skeleton is at least one group selected from metal-free phthalocyanines, or copper, iron, nickel, cobalt, zinc or aluminum metal-containing phthalocyanines.

13. A process for producing the crosslinked polymer according to any of claims 1 to 12, **characterized by** reacting an active hydrogen-containing group with a group reactive with active hydrogen.

14. A molded adsorbent comprising the crosslinked polymer according to any of claims 1 to 12 held onto a binder.

15. A compound-separating tool comprising at least one crosslinked polymer according to any of claims 1 to 12 which has been coated onto, spread onto, packed or filled into, installed in, inserted into, or hermetically sealed into a support with or without a binder.

16. A compound-separating tool comprising the molded adsorbent according to claim 14 which has been coated onto, spread onto, packed or filled into, installed in, inserted into, or hermetically sealed into a support with or without a binder.

17. The compound-separating tool according to claim 15 or 16, which is a column, cartridge, filter, plate, or capillary for solid phase extraction, liquid chromatography, or gas chromatography, or a plate for thin layer chromatography.

18. A method for treating polycylic organic materials, **characterized by** adsorbing, desorbing, or separating polycyclic organic materials present as a mixture in a solution or a gas by use of the compound-separating tool according to any of claims 15 to 17.

**INTERNATIONAL SEARCH REPORT**

International application No. PCT/JP2004/019235

A. CLASSIFICATION OF SUBJECT MATTER
Int.Cl[7] C08F8/42, C08F8/30, B01J20/26, G01N30/48

According to International Patent Classification (IPC) or to both national classification and IPC

B. FIELDS SEARCHED

Minimum documentation searched (classification system followed by classification symbols)
Int.Cl[7] C08F8/42, C08F8/30, B01J20/26, G01N30/48

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 58-170506 A (Sumitomo Chemical Co., Ltd.), 07 October, 1983 (07.10.83), Claims; page 2, upper right column, line 13 to lower left column, line 1; page 2, lower left column, line 14 to page 3, upper right column, line 7; examples & EP 90610 A2 & US 4460475 A | 1-2,4-6, 8-9,11-18 |
| X | JP 62-59621 A (TDK Corp.), 16 March, 1987 (16.03.87), Cliams; page 4, lower left column, lines 15 to 18; examples (Family: none) | 1-5,7-9, 11-18 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March, 2005 (08.03.05) | 22 March, 2005 (22.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.
PCT/JP2004/019235

C (Continuation). DOCUMENTS CONSIDERED TO BE RELEVANT

| Category* | Citation of document, with indication, where appropriate, of the relevant passages | Relevant to claim No. |
|---|---|---|
| X | JP 61-258806 A (Kabushiki Kaisha Asukurin), 17 November, 1986 (17.11.86), Claims; page 3, upper left column, line 6 to lower left column, line 2; page 3, lower right column, line 11 to page 4, upper left column, line 8; examples (Family: none) | 1-3,12,15-18 |
| X | JP 59-62188 A (TDK Corp.), 09 April, 1984 (09.04.84), Claims; page 2, lower left column, line 17 to page 4, upper column (Family: none) | 1-4,12 |
| X | JP 62-101603 A (Kabushiki Kaisha Asukurin), 12 May, 1987 (12.05.87), Claims (Family: none) | 1-3,11-12 |
| A | JP 62-101603 A (Kabushiki Kaisha Asukurin), 12 May, 1987 (12.05.87), Claims (Family: none) | 1-13 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61013481 A
- JP 62001540 A
- JP 1007817 A
- JP 4000698 A
- JP 6015036 A
- JP 4148860 A
- JP 54361959 B
- JP 127801960 B
- JP 50331963 B
- JP 176761964 B
- JP 77821965 B
- JP 47001027 A